# EUROPEAN PATENT APPLICATION

(11) **EP 3 722 964 A1**
(43) Date of publication of application: **14.10.2020**
(21) Application number: 18884975.6
(22) Date of filing: 28.09.2018
(51) Int. Cl.: G06F 16/00, G06Q 30/00

(54) **INFORMATION PROCESSING DEVICE, INFORMATION PROCESSING METHOD, AND PROGRAM**

(30) Priority: 04.12.2017 JP 2017232511
(71) Applicant: Sony Corporation, Tokyo 108-0075 (JP)
(72) Inventor: TAKAHASHI, Koki, Tokyo 141-0031 (JP); WRIGHT, Christopher, London SE19 3HF (GB); LAWRENSON, Matthew, Lausanne 1015 (CH)
(74) Representative: MFG Patentanwälte Meyer-Wildhagen Meggle-Freund Gerhard PartG mbB
(86) International application number: PCT/JP2018/036382
(87) International publication number: WO 2019/111508

(57) **Abstract**

It is possible to more appropriately evaluate reliability of online information.

There is provided an information processing apparatus including: an acquiring unit that acquires information regarding an event performed on online information by a user and history information of the user registered in a P2P database; and an evaluating unit that evaluates reliability of the online information on the basis of the information regarding the event and the history information.

## Description

### TECHNICAL FIELD

The present disclosure relates to an information processing apparatus, an information processing method, and a program.

### BACKGROUND ART

In recent years, a service that uses a peer-to-peer database including blockchain data disclosed in Non-Patent Document 1 has been actively developed. Examples of such a service can include Bitcoin of Non-Patent Document 2, and the like, which uses blockchain data for exchange of a virtual currency. In the service that uses the peer-to-peer database including the blockchain data, it is possible to prevent tampering and the like of information managed in the peer-to-peer database to secure authenticity of the information.

Now, here, when considering media that disclose various types of information, the number of users of social media including a social networking service (SNS) has continuously increased with the increase in the number of Internet users. As a result, the social media have functioned as one of main means when the users access the various types of information. In the social media, the users can easily perform various events such as disclosure, sharing, evaluation, or the like, of arbitrary information.

### CITATION LIST

### NON-PATENT DOCUMENT

Non-Patent Document 1: Melanie Swan, "Blockchain", (U.S.), O'Reilly Media, January 22, 2015
Non-Patent Document 2: Andreas M. Antonopoulos, "Mastering Bitcoin", (U.S.), O'Reilly Media, December 1, 2014

### SUMMARY OF THE INVENTION

### PROBLEMS TO BE SOLVED BY THE INVENTION

However, due to the ease, there was a case where information having low reliability is disclosed on the social media. For example, there was a case where papers that are rarely peer-reviewed are disclosed on the social media by research journal publishers, and the like. It is not easy for the users to decide authenticity of the disclosed information.

Therefore, the present disclosure has been made in view of the problems described above, and an object of the present disclosure is to provide a new and improved information processing apparatus, information processing method, and program capable of appropriately evaluating reliability of information disclosed online (hereinafter, also referred to as "online information").

### SOLUTIONS TO PROBLEMS

According to the present disclosure, there is provided an information processing apparatus including: an acquiring unit that acquires information regarding an event performed on online information by a user and history information of the user registered in a P2P database; and an evaluating unit that evaluates reliability of the online information on the basis of the information regarding the event and the history information.

Furthermore, according to the present disclosure, there is provided an information processing method executed by a computer, including: acquiring information regarding an event performed on online information by a user and history information of the user registered in a P2P database; and evaluating reliability of the online information on the basis of the information regarding the event and the history information.

Furthermore, according to the present disclosure, there is provided a program for causing a computer to realize: acquiring information regarding an event performed on online information by a user and history information of the user registered in a P2P database; and evaluating reliability of the online information on the basis of the information regarding the event and the history information.

### EFFECTS OF THE INVENTION

As described above, according to the present disclosure, it is possible to more appropriately evaluate the reliability of the online information.

Note that the effect described above is not necessarily restrictive, and any effect set forth in the present specification or other effects that can be grasped from the present specification may be accomplished together with or instead of the effect described above.

### BRIEF DESCRIPTION OF DRAWINGS

Fig. 1 is a diagram illustrating an overview of blockchain data, which is a kind of peer-to-peer database.
Fig. 2 is a diagram illustrating an overview of blockchain data, which is a kind of peer-to-peer database.
Fig. 3 is a diagram illustrating an overview of blockchain data, which is a kind of peer-to-peer database.
Fig. 4 is a diagram illustrating a configuration example of an information processing system according to the present embodiment.
Fig. 5 is a diagram illustrating a specific example of calculation processing and update processing of a validity reliability value by an information providing apparatus 100 according to the present embodiment.
Fig. 6 is a block diagram showing a functional configuration example of the information providing apparatus 100 according to the present embodiment.
Fig. 7 is a block diagram showing a functional configuration example of a node apparatus 200 according to the present embodiment.
Fig. 8 is a block diagram showing a functional configuration example of a user apparatus 300 according to the present embodiment.
Fig. 9 is a flowchart showing an example of a flow of update processing of a validity reliability value.
Fig. 10 is a flowchart showing an example of a flow of update processing of a validity reliability value.
Fig. 11 is a flowchart showing an example of a flow of provision processing of online information.
Fig. 12 is a block diagram showing an example of a hardware configuration of an information processing apparatus 900 that realizes the information providing apparatus 100, the node apparatus 200, or the user apparatus 300 according to the present embodiment.

### MODE FOR CARRYING OUT THE INVENTION

Hereinafter, preferred embodiments of the present disclosure will be described in detail with reference to the accompanying drawings. Note that, in the present specification and the drawings, components having substantially the same functional configuration will be denoted by the same reference numerals and an overlapping description will be omitted.

Note that a description will be given in the following order.
1. Overview of peer-to-peer database
2. Embodiment
2.1. Overview
2.2. System configuration example
2.3. Functional configuration example of information providing apparatus 100
2.4. Functional configuration example of node apparatus 200
2.5. Functional configuration example of user apparatus 300
2.6. Flow of processing
3. Modification
3.1. Request of feedback from user
3.2. Coping with change in evaluation
3.3. Update of validity reliability value by P2P database program 222
4. Hardware configuration example
5. Summary

### <1. Overview of peer-to-peer database>

Before describing an embodiment of the present disclosure, an overview of a peer-to-peer database will be first described.

In an information processing system according to the present embodiment, a distributed peer-to-peer database distributed in a peer-to-peer network is used. Note that the peer-to-peer network may be called a peer-to-peer distributed file system. Hereinafter, the peer-to-peer network may be referred to as a "P2P network", and the peer-to-peer database may be referred to as a "P2P database". As an example of the P2P database, blockchain data distributed in the P2P network may be used. Therefore, first, an overview of a blockchain system will be described as an example.

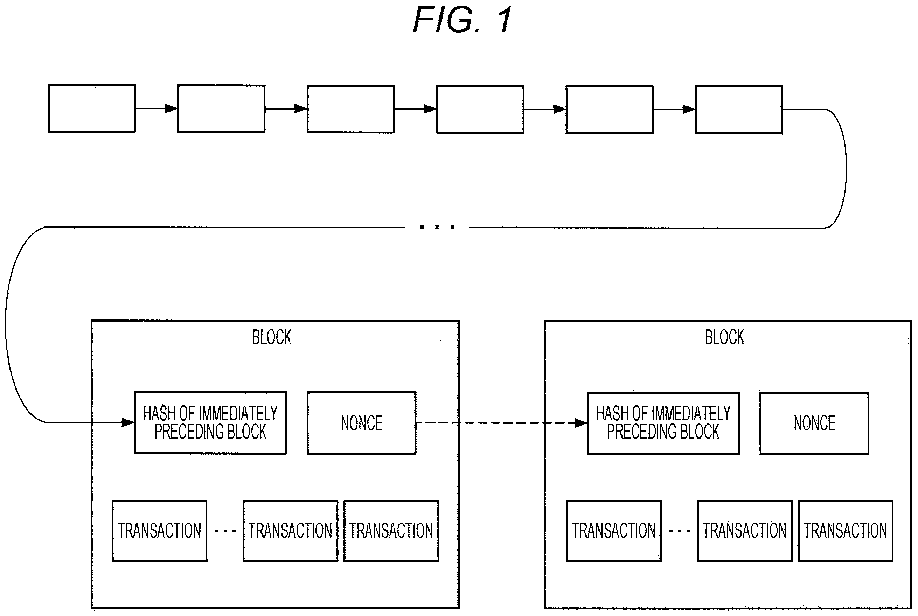

As shown in Fig. 1, blockchain data is data including a plurality of blocks connected to each other as if the plurality of blocks was a chain. In each block, one or two or more target data can be stored as a transaction.

Examples of the blockchain data can include blockchain data used for exchange of data of a virtual currency such as Bitcoin and the like. The blockchain data used for exchange of the data of the virtual currency includes, for example, a hash of the immediately preceding block and a value called nonce. The hash of the immediately preceding block is information used to judge whether or not a block is a "correct block" that is correctly connected to the immediately preceding block. The nonce is information used in order to prevent spoofing in authentication using the hash, and tampering is prevented by using the nonce. Examples of the nonce can include a character string, a numeric string, data indicating a combination of the character string and the numeric string, or the like.

Furthermore, in the blockchain data, an electronic signature using an encryption key is given to data of each transaction to prevent spoofing. Furthermore, the data of each transaction is disclosed and shared throughout the P2P network. Note that the data of each transaction may be encrypted using the encryption key.

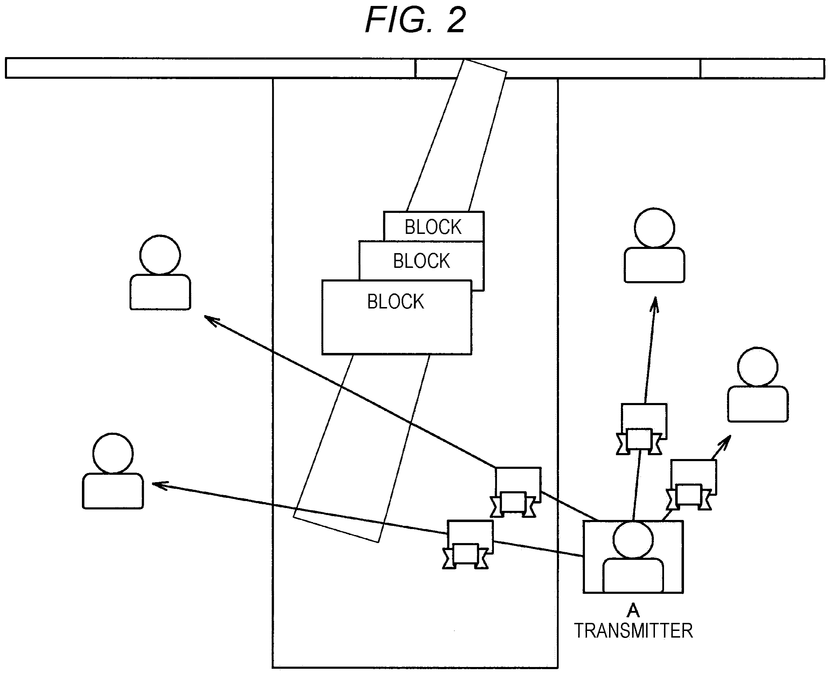

Fig. 2 is a diagram showing a state in which target data is registered by user A in the blockchain system. User A electronically signs the target data to be registered in the blockchain data using private key of user A. Then, user A broadcasts a transaction including the electronically signed target data on the P2P network. Therefore, it is secured that an owner of the target data is user A.

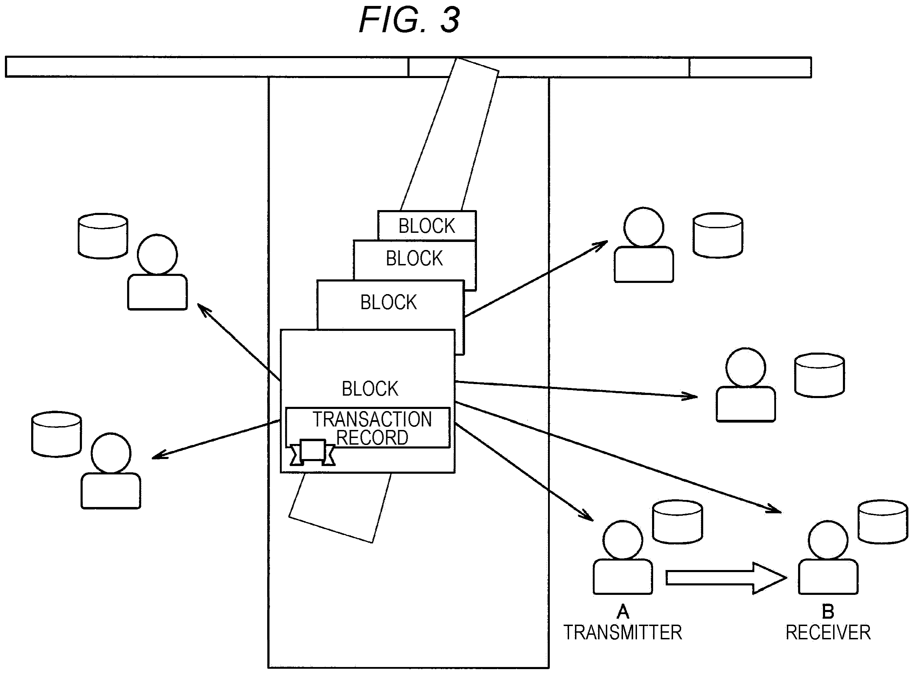

Fig. 3 is a diagram showing a state in which the target data is transferred from user A to user B in the blockchain system. User A performs an electronic signature using the private key of user A in the transaction, and includes a public key of user B in the transaction. Therefore, it is indicated that the target data has been transferred from user A to user B. Furthermore, user B may acquire a public key of user A from user A to acquire the electronically signed or encrypted target data, in the transaction of the target data.

Furthermore, in the blockchain system, for example, by using sidechain technology, it is possible to include other target data different from a virtual currency in blockchain data used for exchange of data of an existing virtual currency, such as blockchain data of Bitcoin, and the like.

### <2. Embodiment>

The overview of the peer-to-peer database has been described hereinabove. Next, an embodiment of the present disclosure will be described.

### (2.1. Overview)

First, an overview of an embodiment of the present disclosure will be described.

As described above, with the increase in the number of Internet users, the number of users of social media including an SNS has continuously increased, such that the social media have functioned as one of main means when the users access various types of information. For example, recent research has shown that 44% of Americans are acquiring news information using Facebook (registered trademark) and the social media is replacing television broadcasting, particularly, in a case of younger users (for example, 18 to 24-years-old users).

In the social media, the users can easily disclose information, but false information is also disclosed without being restricted. For example, there is a case where papers that are rarely peer-reviewed are disclosed on the social media by research journal publishers, and the like. It is not easy for the user to decide authenticity of disclosed online information.

Furthermore, the users tend to acquire or share only information that matches their beliefs or opinions. As described above, when the information acquired or shared by the users is biased, a specific viewpoint, ideology, idea, or the like, is selectively supported, and other viewpoints and the like are excluded. Therefore, an opportunity for the users to learn or think about conflicting viewpoints and the like is limited.

In a case where information provided to the user is controlled on the basis of a browsing history of the user and the like, this influence becomes larger. For example, as the user continuously browses the provided information by the browsing history and the like or agrees with the information, the bias of the provided information becomes larger. At this time, in a case where an error is contained in the provided information or a misleading expression that causes a misunderstanding is contained in the provided information, the user may have wrong recognition, which is a problem.

The present disclosers have invented the present disclosure in view of the circumstance described above. An information processing system according to the present disclosure can more appropriately evaluate reliability of online information. Then, the information processing system according to the present disclosure can control provision of the online information on the basis of the reliability. Therefore, the information processing system according to the present disclosure can prevent online information having low reliability from being provided to the user (or can provide information regarding the reliability of the online information to the user), and thus, can further enhance a learning effect.

### (2.2. System configuration example)

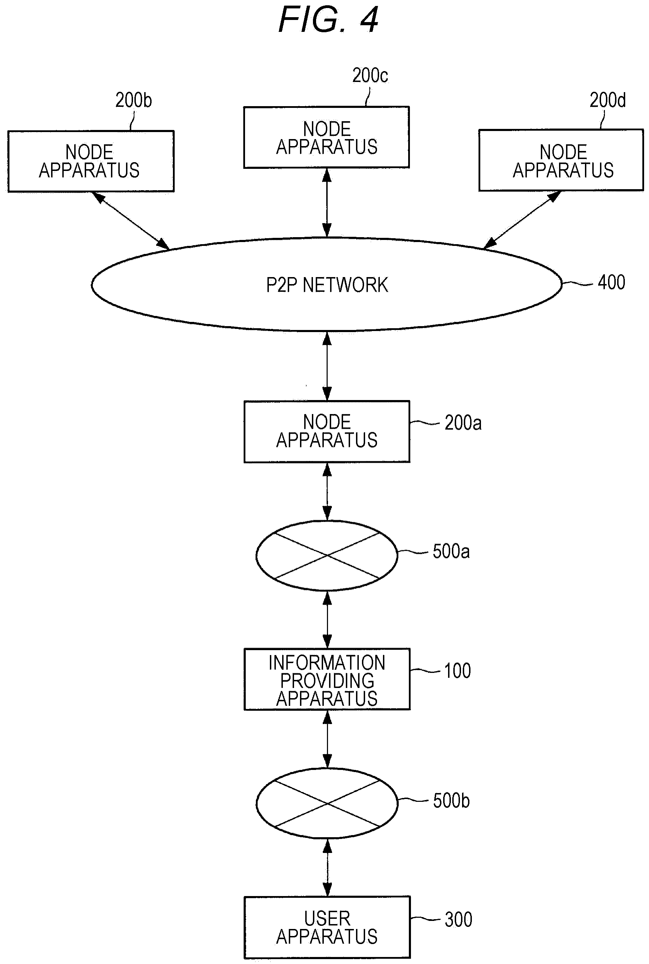

The overview of the present embodiment has been described hereinabove. Next, a configuration example of an information processing system according to the present embodiment will be described with reference to Fig. 4.

As shown in Fig. 4, the information processing system according to the present embodiment includes an information providing apparatus 100, a plurality of node apparatuses 200 (node apparatuses 200a to 200d in Fig. 4), and a user apparatus 300. Furthermore, the plurality of node apparatuses 200 is each connected to a P2P network 400. Moreover, the information providing apparatus 100 and the node apparatus 200a are connected to each other by a network 500a, and the information providing apparatus 100 and the user apparatus 300 are connected to each other by a network 500b. Note that a configuration of the information processing system according to the present embodiment is not limited to a configuration of Fig. 4. For example, the number of apparatuses constituting the information processing system may be changed as appropriate. Furthermore, the information providing apparatus 100 may be connected to the node apparatus 200 other than the node apparatus 200a.

### (Information providing apparatus 100)

The information providing apparatus 100 is an information processing apparatus that provides online information to a user. For example, the information providing apparatus 100 is an apparatus that provides SNS, and may provide the online information to the user by arranging the online information on an SNS site disclosed on the Internet. Note that the information providing apparatus 100 may provide information arranged on a network other than the Internet. For example, the information providing apparatus 100 may provide information arranged on the intranet. Here, the online information can be an arbitrary document, an arbitrary article, an arbitrary post, or the like, but is not limited thereto.

Furthermore, the information providing apparatus 100 is also an information processing apparatus that performs various events on the online information on the basis of input from the user apparatus 300. Here, the event includes sharing of the online information, performance of "Like!" on Facebook (registered trademark), performance of "+1" on Google+ (registered trademark), performance of "retweet" on Twitter (registered trademark), performance of "good/bad evaluation", performance of "useful/not useful", performance of "5-level evaluation", contribution of a comment to the online information, registration of the online information in a "bookmark", or the like. Note that the event is not limited to those described above, and may be any processing event performed on the online information. For example, the event may include arranging arbitrary information on an arbitrary network.

Then, the information providing apparatus 100 evaluates reliability of online information on the basis of information regarding the various events (hereinafter, referred to as "event information") and history information of a user who has performed the event, which is stored in the P2P database.

More specifically, a node apparatus 200 as described later holds the P2P database, and various history information of the user is stored in the P2P database. The history information includes, for example, learning history information, job history information, behavior history information, purchase history information, or the like, but is not limited thereto. The information providing apparatus 100 acquires the history information of the user who has performed the event from the node apparatus 200, evaluates a familiarity of the user with the online information on which the event has been performed, on the basis of the history information, and performs weighting. For example, in a case where an event for sharing online information regarding architecture is performed and it is proven on the basis of the learning history information that the user who has performed the event has majored in architecture, the information providing apparatus 100 decides that a familiarity of the user with the online information is high, and performs weighting according to the familiarity.

Moreover, the node apparatus 200 calculates a validity evaluation value on the basis of the event information. Here, the validity evaluation value is a value obtained by digitizing reliability of the online information on the basis of the event information (in other words, a value before the weighting of the user is applied). More specifically, in a case where an event indicating the reliability of the online information is performed (for example, in a case where "Like!" is performed on the online information, and the like), the validity evaluation value becomes a higher value, and in a case where an event indicating lack of the reliability of the online information is performed (for example, in a case where "bad evaluation" is performed on the online information, and the like), the validity evaluation value becomes a lower value.

Then, the information providing apparatus 100 evaluates the reliability of the online information on which the event has been performed on the basis of the weighting of the user and the validity evaluation value. More specifically, the information providing apparatus 100 performs predetermined calculation using the weighting of the user and the validity evaluation value to calculate a validity reliability value, which is a value obtained by digitizing the reliability of the online information. For example, the information providing apparatus 100 outputs the validity reliability value represented by a scale of -1 to +1. In this case, -1 indicates that the reliability of the online information is the lowest, and can be calculated, for example, in a case where a user having a high familiarity has consistently evaluated that the reliability of the online information is low. On the other hand, +1 indicates that the reliability of the online information is the highest, and can be calculated, for example, in a case where the user having the high familiarity has consistently evaluated that the reliability of the online information is high. Furthermore, 0 indicates that evaluation that the online information is reliable and evaluation that the online information is not reliable are in conflict with each other.

Here, in a case where the number of times (hereinafter, referred to as "the number of times of the event") by which the event is performed on certain online information is smaller than a predetermined value, there is a possibility that accuracy of the validity reliability value will be low because the number of samples is small. Therefore, in a case where the number of times of the event is smaller than the predetermined value, the information providing apparatus 100 may set the validity reliability value to 0. Therefore, the information providing apparatus 100 can avoid performing various types of processing on the basis of the validity reliability value having the low accuracy. Note that a calculation content of the validity reliability value is not particularly limited.

Moreover, the information providing apparatus 100 controls registration of the calculated validity reliability value in the P2P database. More specifically, the information providing apparatus 100 requests the node apparatus 200 to register the validity reliability value in the P2P database. By registering the validity reliability value in the P2P database, authenticity of the validity reliability value is secured.

Then, thereafter, in a case where a new event is performed on the same online information, the information providing apparatus 100 acquires the validity reliability value of the online information stored in the P2P database, and updates the validity reliability value. In other words, in a case where a plurality of users performs an event on the same online information, the information providing apparatus 100 updates the validity reliability value every time the plurality of users performs the event. Therefore, as the number of users who have performed an event on certain online information increases, accuracy of the validity reliability value of the online information is improved. A method of updating the validity reliability value is not particularly limited. For example, the information providing apparatus 100 may update the validity reliability value by calculating a validity reliability value corresponding to the new event by the method described above and calculating an average value of the validity reliability values using the newly calculated validity reliability value and the validity reliability value stored in the P2P database.

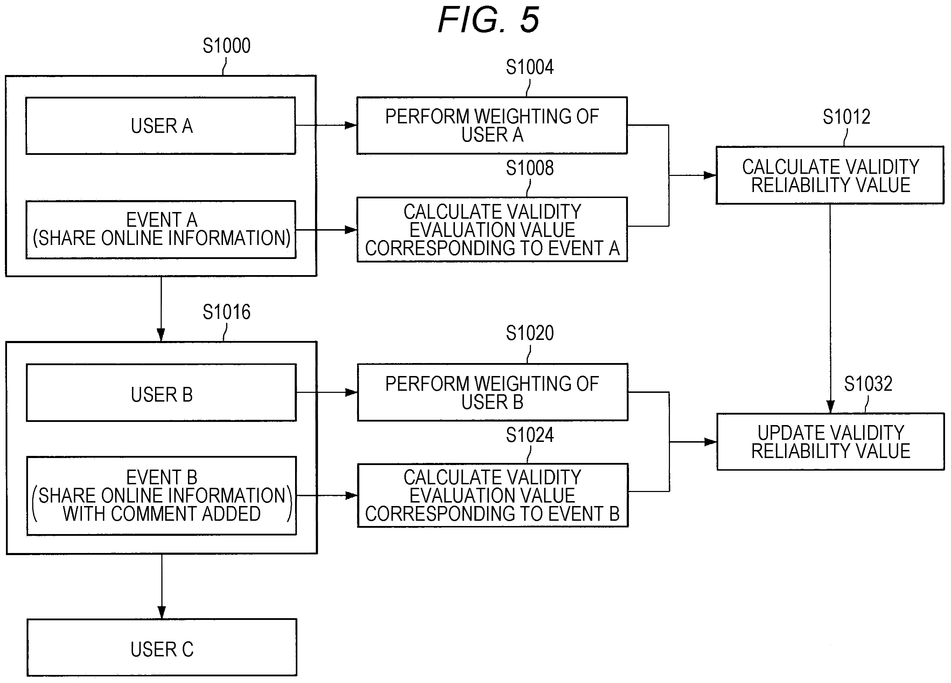

Here, a specific example of calculation processing and update processing of the validity reliability value by the information providing apparatus 100 will be described with reference to Fig. 5. For example, in step S1000, it is assumed that user A has performed event A for sharing online information with user B. In step S1004, the information providing apparatus 100 acquires history information of user A registered in the P2P database from the node apparatus 200, evaluates a familiarity of user A with the online information on the basis of the history information, and performs weighting. In step S1008, the information providing apparatus 100 calculates a validity evaluation value on the basis of event information. In step S1012, the information providing apparatus 100 calculates a validity reliability value using the weighting of user A and the validity evaluation value. Thereafter, the validity reliability value is registered in the P2P database.

In step S1016, it is assumed that user B has performed event B for adding a comment to the online information shared by user A and sharing the online information with user C. In step S1020, the information providing apparatus 100 acquires history information of user B registered in the P2P database from the node apparatus 200, evaluates a familiarity of user B with the online information on the basis of the history information, and performs weighting. In step S1024, the information providing apparatus 100 calculates a validity evaluation value on the basis of event information. In step S1032, the information providing apparatus 100 acquires the validity reliability value registered in the P2P database, and updates the validity reliability value using the weighting of user B and the validity evaluation value. Thereafter, the updated validity reliability value is registered in the P2P database.

Then, the information providing apparatus 100 controls provision of the online information on the basis of the validity reliability value. For example, in a case where the user performs an operation of requesting the online information using the user apparatus 300 (for example, in a case where the user designates an arbitrary uniform resource locator (URL)), the information providing apparatus 100 requests the node apparatus 200 to transmit the validity reliability value of the online information. Then, the information providing apparatus 100 controls provision of the online information on the basis of the validity reliability value acquired from the P2P database. For example, the information providing apparatus 100 may not provide online information in which validity reliability value is smaller than a predetermined value to the user (for example, the information providing apparatus 100 may not display the online information). Therefore, acquisition of the online information having low reliability by the user is avoided. Furthermore, the information providing apparatus 100 may provide not only the online information but also the validity reliability value by associating the validity reliability value with the online information (for example, the information providing apparatus 100 may display not only the online information but also the validity reliability value). Therefore, when the user acquires the online information, it is possible to recognize a level of the reliability of the online information.

Note that a kind of the information providing apparatus 100 is not particularly limited. For example, the information providing apparatus 100 may be an arbitrary apparatus such as a general-purpose computer, a personal computer (PC), a tablet PC, and the like.

### (Node apparatus 200)

The node apparatus 200 is an information processing apparatus that is connected to the P2P network 400 and holds the P2P database. As described above, various history information of the user is registered in the P2P database. The history information includes, for example, learning history information such as a learning achievement record (for example, a record regarding an examination result, an acquired credit, an acquired qualification, or the like) of the user, an activity record (for example, a record regarding a club activity, a student council activity, an attendance situation, or the like) of the user, and the like, registered by each educational institution (for example, a nursery school, a kindergarten, an elementary school, a junior high school, a high school, a university, a graduate school, a cram school, a preparatory school, a qualification school, or the like). Furthermore, the history information includes job history information (for example, an industry name, a company name, a job content, a job start date, a job end date, an official position, or the like), behavior history information (for example, a behavior content, a behavior date and time, a behavior place, a behavior frequency, or the like) (event information is also included in the behavior history information), or purchase history information (for example, an article name, an amount of money, a purchase date, or the like).

Furthermore, the online information on which the event has been performed or the validity reliability value of the online information is also registered in the P2P database. Note that the information registered in the P2P database is not limited to those described above. For example, the validity evaluation value or the weighting of the user used for calculating the validity reliability value may be registered in the P2P database. These pieces of information are registered in the P2P database to secure authenticity.

Then, the node apparatus 200 performs acquisition of information from the P2P database and registration of information in the P2P database. With respect to the acquisition of the information, the node apparatus 200 acquires the history information of the user and the validity reliability value at that point in time from the P2P database at the time of updating the validity reliability value, and provides the acquired history information and validity reliability value to the information providing apparatus 100. Furthermore, in a case where the information providing apparatus 100 requests the online information from the user, the node apparatus 200 acquires the validity reliability value at that point in time from the P2P database and provides the acquired validity reliability value to the information providing apparatus 100. Note that a case where the node apparatus 200 acquires the information from the P2P database is not limited to those described above.

With respect to the registration of the information, the node apparatus 200 registers the validity reliability value and the like calculated and updated by the information providing apparatus 100 in the P2P database. Furthermore, in a case where new history information of the user is provided, the node apparatus 200 registers the new history information in the P2P database. Note that a case where the node apparatus 200 registers the information in the P2P database is not limited to those described above.

Note that the node apparatus 200 basically uses a predetermined program (hereinafter, referred to as a "P2P database program") provided in the P2P database and executed on the P2P database, in a case where the node apparatus 200 acquires the information from the P2P database, in a case where the node apparatus 200 registers the information in the P2P database, and the like. By using the P2P database program, for example, various types of processing other than a transaction of a virtual currency such as Bitcoin and the like is realized according to a predetermined rule. By providing the P2P database program in the P2P database, a risk that the P2P database program will be illegally altered is reduced.

The P2P database program is a chain code in Hyperledger, but is not limited thereto. For example, the P2P database program may refer to a smart contract. Note that the node apparatus 200 may realize the acquisition of the information from the P2P database and the registration of the information in the P2P database, using a program other than the P2P database program as appropriate. Furthermore, similarly to the information providing apparatus 100, a kind of the node apparatus 200 is not particularly limited.

Furthermore, an example in which the plurality of node apparatuses 200 has the same function has been described in the present embodiment, but each node apparatus 200 may have different functions. For example, a node apparatus 200 (for example, an endorsing peer and the like) endorsing the registration of the information in the P2P database, a node apparatus 200 (for example, an ordering peer and the like) ordering each node apparatus 200 to perform registration after the endorsement, and a node apparatus 200 (for example, a committing peer and the like) registering the information in the P2P database may be provided.

### (P2P network 400)

The P2P network 400 is a network in which the P2P database is distributed. As described above, by connecting each node apparatus 200 to the P2P network 400, it is possible to update the P2P database while maintaining consistency with the P2P database held by the other node apparatuses 200.

Note that a kind of the P2P network 400 is not particularly limited. For example, the P2P network 400 may be any one of a consortium type operated by a plurality of organizations, a private type operated by a single organization, or a public type that does not specifically limit participants.

Note that a communication manner, a kind of line, and the like, used for the P2P network 400 are not particularly limited. For example, the P2P network 400 may be realized by a dedicated line network such as an Internet protocol-virtual private network (IP-VPN) and the like. Furthermore, the P2P network 400 may be realized by a public line network such as the Internet, a telephone line network, a satellite communication network, and the like, various local area networks (LANs) including Ethernet (registered trademark), a wide area network (WAN), and the like. Moreover, the P2P network 400 may be realized by a wireless communication network such as Wi-Fi (registered trademark), Bluetooth (registered trademark), and the like.

### (User apparatus 300)

The user apparatus 300 is an apparatus that is used when the user performs an event on the online information. More specifically, the user can perform input for performing an event such as sharing and the like on the online information by operating the user apparatus 300. The user apparatus 300 realizes the event by generating operation information on the basis of the input from the user and providing the operation information to the information providing apparatus 100.

Furthermore, the user apparatus 300 is an apparatus that receives the online information provided from the information providing apparatus 100. For example, the user apparatus 300 receives the online information arranged on an SNS site disclosed on the Internet, provided from the information providing apparatus 100. The user can acquire desired online information by generating provision request information for requesting provision of the online information by operating the user apparatus 300 and transmitting the provision request information to the information providing apparatus 100. Note that, similarly to the information providing apparatus 100, a kind of the user apparatus 300 is not particularly limited.

Here, the user who uses the user apparatus 300 includes a person who performs the event on the online information or a person who receives the online information. Furthermore, the user is not limited to an individual. For example, the user includes an arbitrary organization or an arbitrary association (for example, a company, an association, a circle, and the like). The user is given an ID as identification information, and information regarding the user is managed in the P2P database.

### (Network 500)

A network 500 is a network that connects the node apparatus 200 and the information providing apparatus 100 to each other and connects the information providing apparatus 100 and the user apparatus 300 to each other. Note that, similarly to the P2P network 400, a communication manner, a kind of line, and the like, used for the network 500 are not particularly limited.

The configuration example of the information processing system according to the present embodiment has been described hereinabove. Note that the configuration described above with reference to Fig. 4 is only an example, and a configuration of the information processing system according to the present embodiment is not limited to such an example. For example, some of the functions of the information providing apparatus 100 may be provided in the node apparatus 200 or the user apparatus 300. For example, software (for example, a WEB application and the like in which a predetermined application programming interface (API) is used) that provides some of the functions of the information providing apparatus 100 may be executed on the node apparatus 200 or the user apparatus 300. Furthermore, some of the functions of the node apparatus 200 may be provided in the information providing apparatus 100 or the user apparatus 300. In other words, the information providing apparatus 100 or the user apparatus 300 may participate in the P2P network 400 to hold the P2P database. The configuration of the information processing system according to the present embodiment can be flexibly modified according to specifications and operations.

### (2.3. Functional configuration example of information providing apparatus 100)

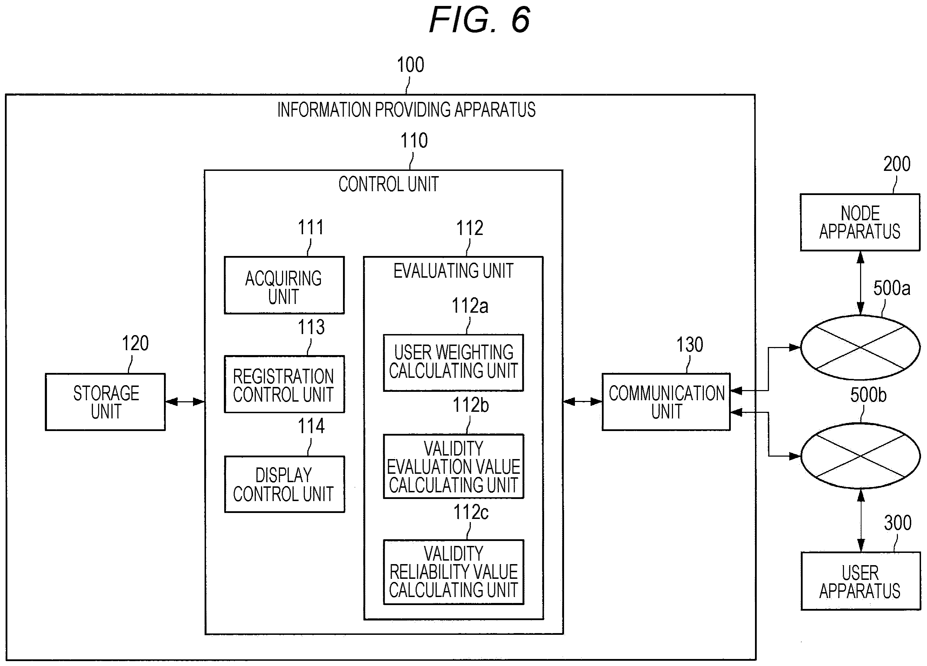

The configuration example of the information processing system according to the present embodiment has been described hereinabove. Next, a functional configuration example of the information providing apparatus 100 will be described with reference to Fig. 6.

As shown in Fig. 6, the information providing apparatus 100 includes a control unit 110, a storage unit 120, and a communication unit 130. Furthermore, the control unit 110 includes an acquiring unit 111, an evaluating unit 112, a registration control unit 113, and a provision control unit 114, and the evaluating unit 112 includes a user weighting calculating unit 112a, and a validity evaluation value calculating unit 112b, and a validity reliability value calculating unit 112c.

### (Control unit 110)

The control unit 110 is a functional configuration that comprehensively controls general processing performed by the information providing apparatus 100. For example, the control unit 110 can control start or stop of each configuration or can control an output unit (not shown) and the like such as a display, a speaker, or the like by generating a control signal. Note that a control content of the control unit 110 is not limited to those described above. For example, the control unit 110 may control processing generally performed in various servers, general-purpose computers, PCs, tablet PCs, and the like.

### (Acquiring unit 111)

The acquiring unit 111 is a functional configuration that acquires various types of information. For example, in a case where the user performs an arbitrary event by operating the user apparatus 300, the acquiring unit 111 detects that the event has been performed, and decides whether or not the event is an event for online information. Then, in a case where the event is the event for the online information, the acquiring unit 111 acquires event information.

Here, the event information includes an ID capable of identifying the online information on which the event has been performed, a content (for example, sharing of the online information, performance of "Like!" on Facebook (registered trademark), performance of "+1" on Google+ (registered trademark), performance of "retweet" on Twitter (registered trademark), performance of "good/bad evaluation", performance of "useful/not useful", performance of "5-level evaluation", contribution of a comment to the online information, registration of the online information in a "bookmark", or the like) of the event, a date and time when the event has been performed, an ID capable of identifying the user who has performed the event, an ID capable of identifying the user apparatus 300 that has been used, or the like, but is not limited thereto. Furthermore, in a case where the user adds some information, such as the contribution of the comment to the online information, and the like, the added information (for example, the comment and the like) itself may also be included in the event information.

Furthermore, the acquiring unit 111 may detect that the user has determined that the user is not to perform the event even though the user could perform the event on the online information, and acquire information (hereinafter, referred to as "non-performed event information". Furthermore, the event itself that has not been performed is referred to as a "non-performed event") regarding the event that has not been performed. For example, in a case where the user has not performed the event such as sharing and the like when he/she has browsed the online information, the acquiring unit 111 may assume that the user has determined that he/she is not to perform the event on the online information, and acquire the non-performed event information. Here, the non-performed event information includes an ID capable of identifying the online information on which the event has not been performed, a content of an event that could be performed but has not be performed, a date and time when the user has determined that the user is not to perform the event (for example, a date and time when a display screen of the online information has been closed), an ID capable of identifying a user who has not performed the event, an ID capable of identifying the user apparatus 300 that has been used, or the like, but is not limited thereto. Note that the acquiring unit 111 adds tag information for distinguishing the event information from the non-performed event information to the event information or the non-performed event information. The non-performed event information can also be used to evaluate the reliability of the online information.

Furthermore, at the time of updating the validity reliability value, the acquiring unit 111 acquires the history information of the user and the validity reliability value at that point in time. More specifically, the acquiring unit 111 acquires the history information of the user and the validity reliability value at that point in time by generating acquisition request information for requesting acquisition of the history information and the validity reliability value at that point in time which are stored in the P2P database and transmitting the acquisition request information to the node apparatus 200. At this time, the acquiring unit 111 designates the history information using an ID of the user included in the event information, and designates the validity reliability value at that point in time using an ID of the online information included in the event information.

Furthermore, in a case where the provision of the online information is requested by the user (for example, in a case where the user desires to browse the online information, and the like), the acquiring unit 111 acquires the validity reliability value of the online information. More specifically, the acquiring unit 111 acquires the validity reliability value by generating acquisition request information for requesting acquisition of the validity reliability value stored in the P2P database and transmitting the acquisition request information to the node apparatus 200. Note that the information acquired by the acquiring unit 111 is not limited to those described above.

### (Evaluating unit 112)

As described above, the evaluating unit 112 is a functional configuration that includes the user weighting calculating unit 112a, the validity evaluation value calculating unit 112b, and the validity reliability value calculating unit 112c and evaluates reliability of the online information by using each of these functional configurations.

### (User weighting calculating unit 112a)

The user weighting calculating unit 112a is a functional configuration that evaluates a familiarity of the user with the online information on which the event was performed on the basis of the history information of the user and performs the weighting of the user. The user weighting calculating unit 112a can evaluate the familiarity of the user with the online information by various methods and perform the weighting of the user.

More specifically, first, the user weighting calculating unit 112a decides a topic of the online information by analyzing the online information. Here, the topic refers to a topic or a theme included in the online information, and includes an arbitrary thing. For example, the topic includes a subject name (for example, mathematics, science, history, or the like), a news category name (for example, politics, economy, sports, entertainment, or the like), an industry name (for example, manufacturing industry, architecture, beauty, services, or the like), a name of a tangible object, a name of an intangible object, or the like. A method of deciding the topic is not particularly limited. For example, the user weighting calculating unit 112a extracts a plurality of keywords included in the online information by analyzing the online information. Then, the user weighting calculating unit 112a may decide the topic of the online information by performing matching between a keyword group related to various topics, which is prepared in advance, and the keywords extracted from the online information, and searching for a topic having the largest number of common keywords.

Then, the user weighting calculating unit 112a performs the weighting on the basis of a degree of association between the topic of the online information and the history information of the user. For example, the user weighting calculating unit 112a extracts a plurality of keywords included in the history information by analyzing the history information. Then, the user weighting calculating unit 112a may obtain a degree of association between the keyword group of the topic and the keywords extracted from the history information by performing matching between the keyword group of the topic and the keywords extracted from the history information, and may perform the weighting in which the degree of association is reflected. For example, in a case where the topic of the online information is architecture and a degree of association between a keyword group of the architecture and the keywords extracted from the history information is high, the user weighting calculating unit 112a decides that the familiarity of the user with the online information is high, and performs the weighting according to the familiarity.

Note that the keyword once extracted from the history information may be stored in the P2P database in association with the history information. Therefore, the user weighting calculating unit 112a can thereafter extract the keyword without analyzing the history information.

Furthermore, the user weighting calculating unit 112a may perform the weighting on the basis of a quantity and a quality of knowledge of the user about the topic of the online information. For example, the user weighting calculating unit 112a calculates a length of a period during which the user has learned the topic by analyzing the history information, and evaluates the quantity of the knowledge of the user about the topic. Furthermore, the user weighting calculating unit 112a evaluates the quality of the user's knowledge about the topic by extracting a test result or the like regarding the topic from the history information. Then, the user weighting calculating unit 112a may perform the weighting by performing predetermined calculation using these pieces of information. Therefore, for example, the user weighting calculating unit 112a can decide that a user whose quantity of the knowledge about the topic of the online information is larger and quality of the knowledge about the topic of the online information is higher has a high familiarity with the online information, and perform the weighting according to the familiarity. Note that those described above are only an example, and a method of evaluating the quantity and the quality of the knowledge of the user about the topic and a method of performing the weighting are not particularly limited.

Furthermore, the user weighting calculating unit 112a may perform the weighting on the basis of a temporal proximity between the event and each history. For example, the user weighting calculating unit 112a extracts dates and times of occurrence of histories related to the online information from the history information, and compares a date and time of occurrence of the last occurring history of the extracted dates and times with a date and time of the event. Then, the user weighting calculating unit 112a may perform the weighting on the basis of proximity between these dates and times. Therefore, for example, the user weighting calculating unit 112a can decide that a user who has recently studied the topic has a higher familiarity than that of a user who has not studied the same topic for several years, and perform the weighting according to the familiarity. Note that those described above are only an example, and a method of calculating the temporal proximity between the event and each history and a method of performing the weighting are not particularly limited.

Furthermore, in a case where the online information includes a plurality of topics, the user weighting calculating unit 112a may perform the weighting for each topic. For example, in a case where the online information includes two topics, biology and chemistry, and the user has only a history information regarding the biology, the user weighting calculating unit 112a may perform higher weighting only on a part of the biology in the online information. At this time, the user weighting calculating unit 112a may add tag information to the weighted topic so that weighting of each topic in the online information is identified.

Furthermore, the user weighting calculating unit 112a may perform the weighting on the basis of the number of topics with which the user is familiar, among the plurality of topics included in the online information. For example, in a case where five topics are included in the online information and there are a user who is familiar with all of the five topics and a user who is familiar with only one of the five topics, the user weighting calculating unit 112a may perform higher weighting on the former user according to the number of topics.

Furthermore, the user weighting calculating unit 112a may decide whether or not the user is a user who has a tendency to perform appropriate evaluation (for example, whether or not a similarity between the evaluation by the user and evaluation by the majority of other users is high, and the like) by analyzing the event information and the like included in the history information, and perform the weighting on the basis of a decision result.

Note that the user weighting calculating unit 112a may evaluate the familiarity of the user with the online information by combining the methods described above with each other, and perform the weighting. Furthermore, the methods described above are only an example, and the user weighting calculating unit 112a may evaluate the familiarity of the user with the online information by a method other than the methods described above, and perform the weighting. The user weighting calculating unit 112a provides information regarding the weighting of the user to the validity reliability value calculating unit 112c.

### (Validity evaluation value calculating unit 112b)

The validity evaluation value calculating unit 112b is a functional configuration that calculates the validity evaluation value on the basis of the event information. The validity evaluation value calculating unit 112b can calculate the validity evaluation value by various methods.

For example, the validity evaluation value calculating unit 112b may calculate the validity evaluation value on the basis of a kind of the event. For example, the validity evaluation value calculating unit 112b may calculate a lower validity evaluation value for an event that the user can more easily perform (for example, "Like!" and the like that can be more easily performed than sharing of information) than for other events.

Furthermore, in a case where the user adds some information such as the contribution of the comment to the online information, and the like, the validity evaluation value calculating unit 112b may analyze the added information, and perform the validity evaluation value on the basis of an analysis result. For example, in a case where it is analyzed that an expression (for example, a text, a pictogram, or the like) indicating that the user trusts the online information is included in the added information, the validity evaluation value calculating unit 112b may calculate a higher validity evaluation value.

Furthermore, the validity evaluation value calculating unit 112b may calculate the validity evaluation value on the basis of an event that has been performed by the user in the past. More specifically, the validity evaluation value calculating unit 112b recognizes the event that has been performed by the user in the past on the basis of the history information. Then, for example, in a case where the user has performed a similar event by the number of times more than a predetermined number of times within a predetermined period, the validity evaluation value calculating unit 112b may decide that the event is not special for the user, and calculate a lower validity evaluation value.

Furthermore, the validity evaluation value calculating unit 112b may calculate the validity evaluation value on the basis of the non-performed event information (in other words, the validity evaluation value calculating unit 112b may treat the non-performed event as an event or may treat the non-performed event information as event information). Here, it can be said that occurrence of the non-performed event indicates that the user does not attach importance to the online information, such that the occurrence of the non-performed event may act so as to increase the validity evaluation value, but may act so as to reduce the validity evaluation value. For example, in a case where a user who has a high familiarity with the online information and frequently performs an event does not perform the event, the validity evaluation value calculating unit 112b may calculate a low validity evaluation value on the basis of the non-performed event information.

Note that the validity evaluation value calculated on the basis of the non-performed event information may have low accuracy (in other words, a correlation between the fact that the event has not been performed and reliability of the online information may be low). Therefore, in consideration of that point, an influence of the validity evaluation value calculated on the basis of the non-performed event information on the validity reliability value may be handled to be smaller than an influence of the validity evaluation value calculated on the basis of the event information on the validity reliability value. Therefore, a more accurate validity reliability value can be calculated.

Note that the validity evaluation value calculating unit 112b may calculate the validity evaluation value by combining the methods described above with each other. Furthermore, the methods described above are only an example, and the validity evaluation value calculating unit 112b may calculate the validity evaluation value by a method other than the methods described above. The validity evaluation value calculating unit 112b provides the calculated validity evaluation value to the validity reliability value calculating unit 112c.

### (Validity reliability value calculating unit 112c)

The validity reliability value calculating unit 112c is a functional configuration that calculates the validity reliability value on the basis of the weighting of the user and the validity evaluation value. More specifically, the validity reliability value calculating unit 112c calculates the validity reliability value by performing predetermined calculation using the weighting of the user and the validity evaluation value. For example, as described above, the validity reliability value calculating unit 112c outputs the validity reliability value represented by the scale of -1 to +1.

Furthermore, in a case where a validity reliability value calculated in the past exists for target online information, the validity reliability value calculating unit 112c updates the validity reliability value on the basis of the validity reliability value, the weighting of the user, and the validity evaluation value. More specifically, in a case where a new event occurs, the validity reliability value calculating unit 112c acquires the validity reliability value stored in the P2P database and updates the validity reliability value. For example, the validity reliability value calculating unit 112c may update the validity reliability value by calculating a validity reliability value corresponding to the new event by the method described above and calculating an average value of the validity reliability values using the newly calculated validity reliability value and the validity reliability value stored in the P2P database.

Here, the validity reliability value calculating unit 112c updates the validity reliability value every time an event occurs. Therefore, the validity reliability value calculating unit 112c can reflect an appropriate validity reliability value early, and, for example, online information including false information can thus be prevented from being spread. Furthermore, for example, in a case where the validity reliability value is updated by batch processing after a plurality of events has occurred, there is a possibility that the event information will be tampered with before the batch processing. In this regard, in a case where the validity reliability value is updated every time the event occurs, such tampering is prevented. Note that a form of updating the validity reliability value is not limited to that described above.

Moreover, the validity reliability value calculating unit 112c associates the calculated validity reliability value with the number of times of the event. Here, in a case where the number of times of the event is smaller than a predetermined value, there is a possibility that accuracy of the validity reliability value will be low because the number of samples is small. By associating the number of times of the event with the validity reliability value, the accuracy of the validity reliability value can be decided. The validity reliability value calculating unit 112c provides the calculated validity reliability value to the registration control unit 113.

### (Registration control unit 113)

The registration control unit 113 is a functional configuration that controls registration of various types of information in the P2P database. For example, in a case where the validity reliability value is calculated or updated, the registration control unit 113 generates registration request information for requesting registration of the validity reliability value and various types of information (for example, the event information, the weighting of the user, the validity evaluation value, the number of times of the event, or the like) output in the course of processing in the P2P database, and transmits the registration request information to the node apparatus 200. Therefore, these pieces of information are registered in the P2P database.

The registration control unit 113 may control registration of the history information of the user in the P2P database. For example, the registration control unit 113 may control registration of history information regarding behavior of the user in various services such as SNS and the like, provided by the information providing apparatus 100, in the P2P database. Note that the information whose registration in the P2P database is controlled is not limited to those described above. For example, the registration control unit 113 may acquire learning history information, job history information, behavior history information, purchase history information, or the like, and control registration of these pieces of history information in the P2P database.

### (Provision control unit 114)

The provision control unit 114 is a functional configuration that controls the provision of the online information to the user. More specifically, the provision control unit 114 controls the provision of the online information to the user on the basis of the validity reliability value of the online information. For example, the provision control unit 114 may not provide (or may not display) online information in which validity reliability value is smaller than a predetermined value to the user by performing filtering processing. Therefore, access to the online information having low reliability by the user is avoided.

Furthermore, the provision control unit 114 may provide not only the online information but also the validity reliability value by associating the validity reliability value with the online information. For example, the provision control unit 114 may display not only online information but also the validity reliability value. Furthermore, the provision control unit 114 may provide notification of the validity reliability value by color-coding the online information itself or information (for example, a URL and the like) regarding the online information. Furthermore, the provision control unit 114 may provide notification of the validity reliability value by performing a notification and the like by a pop-up (for example, performing a warning by a pop-up in a case where the validity reliability value is smaller than a predetermined value). Furthermore, the provision control unit 114 may provide the online information side by side in descending order of the validity reliability value (in other words, the provision control unit 114 may provide the online information in a ranking format). Through these pieces of processing, when the user confirms the online information, it is possible to recognize a level of reliability of the online information.

Here, as described above, in a case where the validity reliability value is 0, it indicates that evaluation that the online information is reliable and evaluation that the online information is not reliable are in conflict with each other or that the accuracy of the validity reliability value is low because the number of times of the event is smaller than the predetermined value. Therefore, in a case where the validity reliability value is 0, the provision control unit 114 notifies the user of the reason why the validity reliability value is 0 in some way (notifies the user of the reason by, for example, text, color coding, sound, or the like). Note that in a case where the validity reliability value is 0 because the number of times of the event is smaller than the predetermined value, the provision control unit 114 may also provide notification of the number of times of the event.

Furthermore, in a case where the validity reliability value is 0 because the number of times of the event is smaller than the predetermined value, the provision control unit 114 may provide the online information only to a user having a high familiarity. Therefore, the user having the high familiarity performs an event on the online information, such that a validity reliability value having high accuracy can be obtained early. At this time, in a case where the online information includes a plurality of topics, the provision control unit 114 provides the online information to a user who has a high familiarity with all or some of the plurality of topics. Then, the provision control unit 114 may gradually expand a range of users to which the online information is provided as the number of times of the event increases. More specifically, as the number of times of the event increases, the provision control unit 114 may provide the online information not only to the user having the high familiarity but also to a user having low familiarity, and may finally provide the online information to all the users. Therefore, the provision control unit 114 can provide the online information in which validity reliability value is calculated with the high accuracy, to the user having the low familiarity. Note that a method of controlling the provision of the online information is not limited to those described above.

### (Storage unit 120)

The storage unit 120 is a functional configuration that stores various types of information. For example, the storage unit 120 stores the online information provided to the user, the validity reliability value of the online information, and various types of information (for example, the event information, the weighting of the user, the validity evaluation value, the number of times of the event, or the like) output in the course of various types of processing. Furthermore, the storage unit 120 stores programs, parameters, or the like used by each functional configuration of the information providing apparatus 100. Note that a content of the information stored in the storage unit 120 is not limited to those described above.

### (Communication unit 130)

The communication unit 130 is a functional configuration that controls various communications with the node apparatus 200 and the user apparatus 300. For example, at the time of updating the validity reliability value, the communication unit 130 receives operation information used for performing the event from the user apparatus 300, and when the event is performed on the basis of the operation information, the communication unit 130 receives the history information of the user who has performed the event and the validity reliability value at that point in time, from the node apparatus 200. After the update of the validity reliability value is performed, the communication unit 130 transmits the validity reliability value after being updated and various types of information (for example, the event information, the weighting of the user, the validity evaluation value, the number of times of the event, or the like) output in the course of various types of processing to the node apparatus 200.

Furthermore, in a case where the user requests the online information, the communication unit 130 receives the validity reliability value of the online information from the node apparatus 200, and transmits control information generated on the basis of the validity reliability value to the user apparatus 300. Note that information transmitted and received by the communication unit 130 and a case where the communication unit 130 performs communication are not limited to those described above.

The functional configuration example of the information providing apparatus 100 has been described hereinabove. Note that the functional configuration described above with reference to Fig. 6 is only an example, and the functional configuration of the information providing apparatus 100 is not limited to such an example. For example, the information providing apparatus 100 may not necessarily include all of the configurations shown in Fig. 6. Furthermore, the functional configuration of the information providing apparatus 100 can be flexibly modified according to specifications or operations.

### (2.4. Functional configuration example of node apparatus 200)

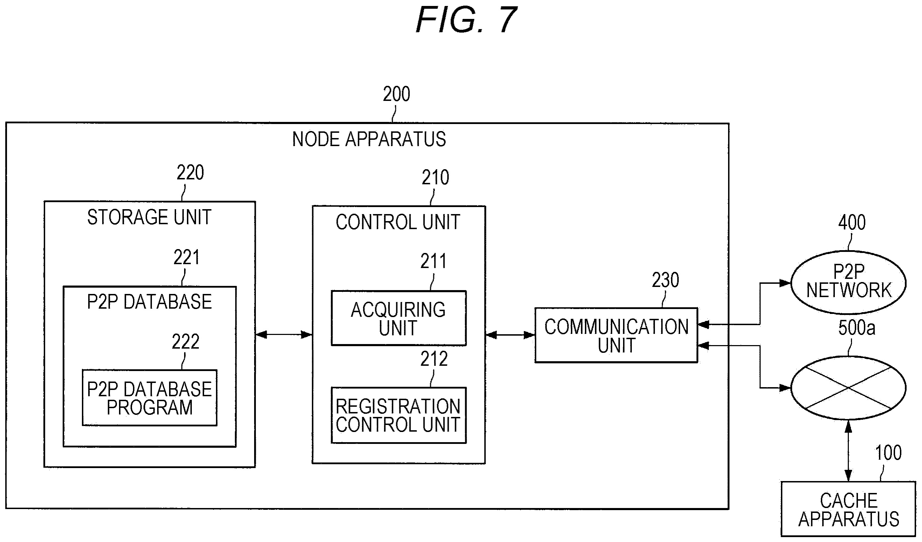

The functional configuration example of the information providing apparatus 100 has been described hereinabove. Next, a functional configuration example of the node apparatus 200 will be described with reference to Fig. 7.

As shown in Fig. 7, the node apparatus 200 includes a control unit 210, a storage unit 220, and a communication unit 230. Furthermore, the control unit 210 includes an acquiring unit 211 and a registration control unit 212. Furthermore, the storage unit 220 includes a P2P database 221, and a P2P database program 222 is provided in the P2P database 221.

### (Control unit 210)

The control unit 210 is a functional configuration that comprehensively controls general processing performed by the node apparatus 200. For example, the control unit 210 can control start or stop of each configuration or can control an output unit (not shown) and the like such as a display, a speaker, or the like by generating a control signal. Note that a control content of the control unit 210 is not limited to those described above. For example, the control unit 210 may control processing generally performed in various servers, general-purpose computers, PCs, tablet PCs, and the like.

### (Acquiring unit 211)

The acquiring unit 211 is a functional configuration that acquires various types of information from the P2P database 221. For example, at the time of updating the validity reliability value, the acquiring unit 211 acquires the history information of the user and the validity reliability value at that point in time from the P2P database 221. Furthermore, in a case where the user requests the online information, the acquiring unit 211 acquires the validity reliability value at that point in time from the P2P database 221. Note that the information that the acquiring unit 211 acquires from the P2P database 221 and a case where the acquiring unit 211 acquires the information from the P2P database 221 are not limited to those described above. The acquiring unit 211 provides the acquired information to the communication unit 230 to enable transmission of the information to the information providing apparatus 100.

### (Registration control unit 212)

The registration control unit 212 is a functional configuration that controls registration of various types of information in the P2P database 221. For example, in a case where the validity reliability value is calculated or updated, the registration control unit 212 registers the validity reliability value and the various types of information (for example, the event information, the weighting of the user, the validity evaluation value, the number of times of the event, or the like) output in the course of the processing, which are provided from the information providing apparatus 100, in the P2P database 221.

Furthermore, the registration control unit 212 may control registration of the history information of the user in the P2P database 221. For example, the registration control unit 212 registers the learning history information, the job history information, the behavior history information, the purchase history information, and the like, provided from the information providing apparatus 100 in the P2P database 221. Note that the information that the registration control unit 212 registers in the P2P database 221 and a case where the registration control unit 212 registers the information are not limited to those described above.

### (Storage unit 220)

The storage unit 220 is a functional configuration that stores various types of information. For example, the storage unit 220 stores programs, parameters, or the like used by each functional configuration of the node apparatus 200. Note that a content of the information stored in the storage unit 220 is not limited to those described above.

### (P2P database 221)

The P2P database 221 is a database that is commonly held by each node apparatus 200, and is, for example, blockchain data. As described above, the history information (for example, the learning history information, the job history information, the behavior history information, the purchase history information, or the like), the online information, the validity reliability value, and the various types of information (for example, the event information, the weighting of the user, the validity evaluation value, the number of times of the event, or the like) output in the course of the various types of processing are registered in the P2P database 221. The various types of information registered in the P2P database 221 may be given an electronic signature using an encryption key or may be encrypted using an encryption key. Note that the information registered in the P2P database 221 is not limited to those described above.

### (P2P database program 222)

The P2P database program 222 is a predetermined program that is provided in the P2P database 221 and is executed on the P2P database 221. By using the P2P database program 222, for example, various types of processing other than a transaction of a virtual currency such as Bitcoin and the like is realized while maintaining consistency according to a predetermined rule. Furthermore, by providing the P2P database program 222 in the P2P database 221, a risk that the P2P database program will be illegally altered is reduced. The P2P database program 222 is a chain code in Hyperledger, but is not limited thereto. For example, the P2P database program 222 may refer to a smart contract.

The P2P database program 222 can realize general processing performed on the P2P database 221. For example, the P2P database program 222 can realize acquisition processing of the various types of information, registration processing of the various types of information, and the like, performed by accessing the P2P database 221. Note that the processing realized by the P2P database program 222 is not limited to those described above. A development language of the P2P database program 222, the number of P2P database programs 222 provided in the P2P database 221, or the like, is not particularly limited.

### (Communication unit 230)

The communication unit 230 is a functional configuration that controls various communications with the information providing apparatus 100 and the other node apparatuses 200. For example, at the time of updating the validity reliability value, the communication unit 230 receives the acquisition request information from the information providing apparatus 100, and transmits the history information and the validity reliability value acquired on the basis of the acquisition request information to the information providing apparatus 100. Furthermore, after the update of the validity reliability value is performed, the communication unit 230 receives the updated validity reliability value from the information providing apparatus 100.

Furthermore, in a case where the user requests the online information, the communication unit 230 receives the acquisition request information from the information providing apparatus 100, and transmits the validity reliability value acquired on the basis of the acquisition request information to the information providing apparatus 100. Note that information transmitted and received by the communication unit 230 and a case where the communication unit 230 performs communication are not limited to those described above.

The functional configuration example of the node apparatus 200 has been described hereinabove. Note that the functional configuration described above with reference to Fig. 7 is only an example, and the functional configuration of the node apparatus 200 is not limited to such an example. For example, the node apparatus 200 may not necessarily include all of the configurations shown in Fig. 7. Furthermore, the functional configuration of the node apparatus 200 can be flexibly modified according to specifications or operations.

### (2.5. Functional configuration example of user apparatus 300)

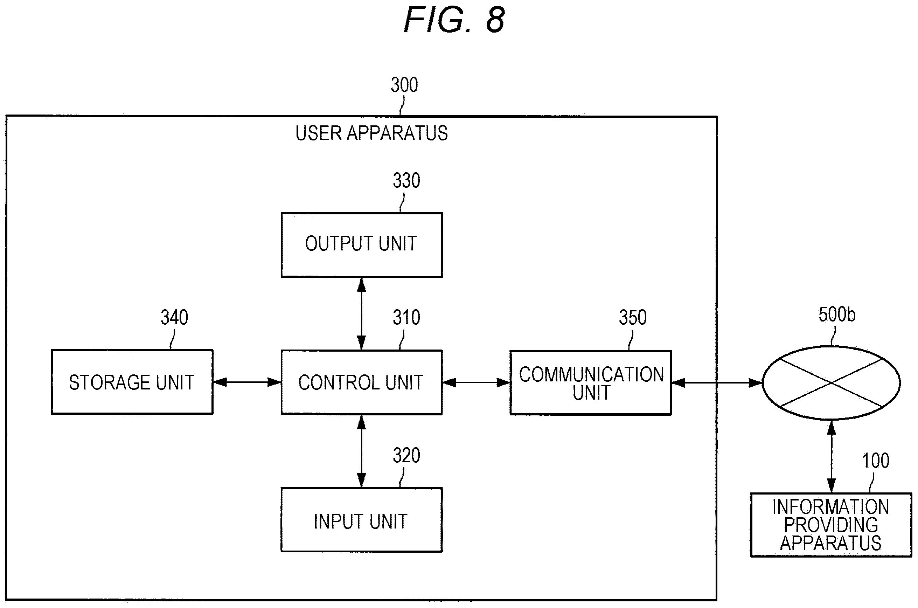

The functional configuration example of the node apparatus 200 has been described hereinabove. Next, a functional configuration example of the user apparatus 300 will be described with reference to Fig. 8.

As shown in Fig. 8, the user apparatus 300 includes a control unit 310, an input unit 320, an output unit 330, a storage unit 340, and a communication unit 350.

### (Control unit 310)

The control unit 310 is a functional configuration that comprehensively controls general processing performed by the user apparatus 300. For example, the control unit 310 can control start or stop of each configuration or can control the output unit 330 such as a display, a speaker, or the like, on the basis of input performed by the user using the input unit 320, the control information received from the information providing apparatus 100 through the communication unit 350, or the like. Note that a control content of the control unit 310 is not limited to those described above. For example, the control unit 310 may control processing generally performed in various servers, general-purpose computers, PCs, tablet PCs, and the like.

### (Input unit 320)

The input unit 320 is a functional configuration that receives the input from the user. For example, the input unit 320 includes an input means such as a mouse, a keyboard, a touch panel, a button, a switch, a microphone, or the like, and the user can perform various events by using these input means. The input unit 320 provides an input content to the control unit 310. Note that the input means provided in the input unit 320 is not particularly limited.

### (Output unit 330)

The output unit 330 is a functional configuration that outputs various types of information. For example, the output unit 330 includes a display means such as a display or the like, a voice output means such as a speaker or the like, and displays the online information, the validity reliability value, or the like on the display or the like or outputs the online information, the validity reliability value, or the like as voice by the speaker or the like on the basis of control of the control unit 310. Note that the output means provided in the output unit 330 is not particularly limited.

### (Storage unit 340)

The storage unit 340 is a functional configuration that stores various types of information. For example, the storage unit 340 stores the online information, the validity reliability value, or the like, or stores programs, parameters, or the like used by each functional configuration of the user apparatus 300. Note that the information stored in the storage unit 340 is not limited to those described above.

### (Communication unit 350)

The communication unit 350 is a functional configuration that controls various communications with the information providing apparatus 100. For example, in a case where the user performs the event, the communication unit 350 transmits the operation information generated on the basis of a user operation to the information providing apparatus 100. Therefore, the event is performed by the information providing apparatus 100.

Furthermore, in a case where the user requests the online information, the communication unit 350 transmits the provision request information generated on the basis of a user operation to the information providing apparatus 100. Then, thereafter, the communication unit 350 receives the control information from the information providing apparatus 100. Control such as display or the like of the online information is performed by the control information.

The functional configuration example of the user apparatus 300 has been described hereinabove. Note that the functional configuration described above with reference to Fig. 8 is only an example, and the functional configuration of the user apparatus 300 is not limited to such an example. For example, the user apparatus 300 may not necessarily include all of the configurations shown in Fig. 8. Furthermore, the functional configuration of the user apparatus 300 can be flexibly modified according to specifications or operations.

### (2.6. Flow of processing)

The functional configuration example of the user apparatus 300 has been described hereinabove. Next, a flow of processing by each apparatus will be described.

### (Flow of update processing of validity reliability value)

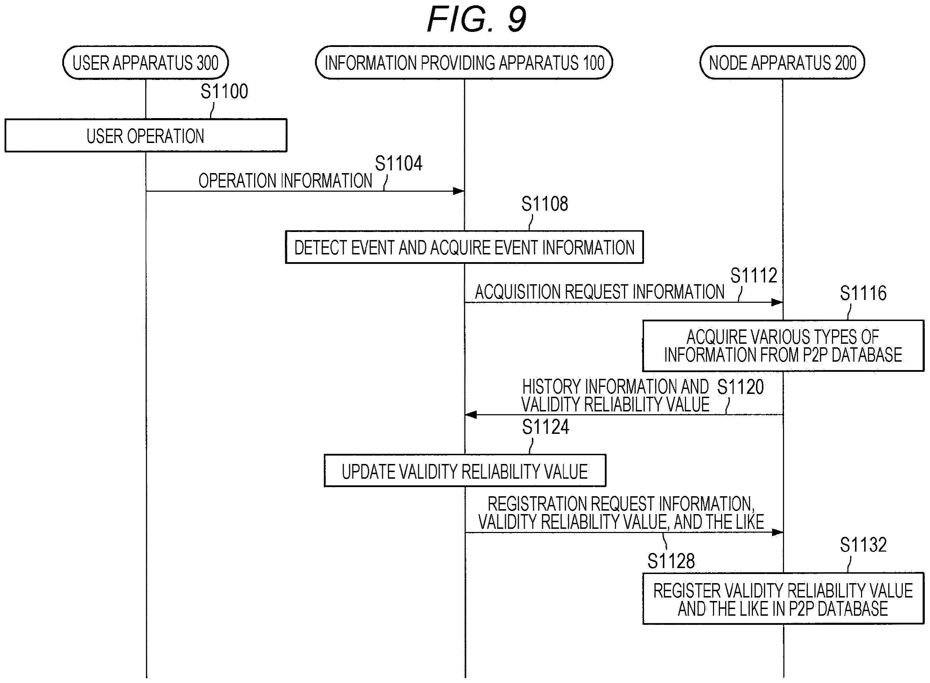

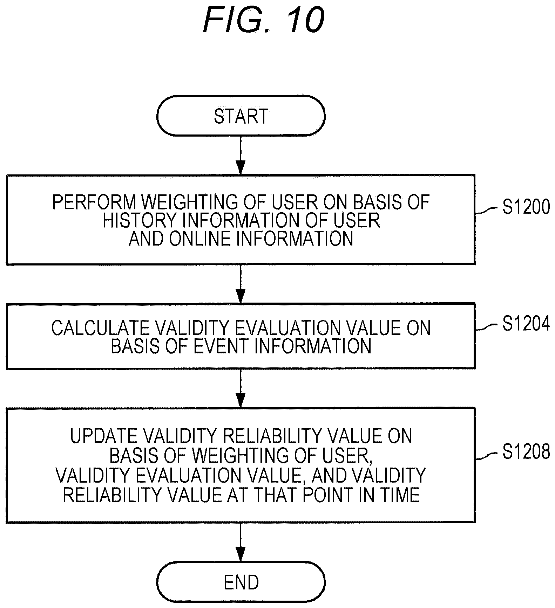

First, an example of a flow of update processing of the validity reliability value will be described with reference to Figs. 9 and 10.

First, in step S1100 in Fig. 9, the user performs various inputs by operating the input unit 320 of the user apparatus 300. In step S1104, the control unit 310 generates the operation information on the basis of an operation by the user, and the communication unit 350 transmits the operation information to the information providing apparatus 100. The control unit 110 of the information providing apparatus 100 performs various types of processing on the basis of the operation information. In a case where the event such as the sharing or the like of the online information is performed, in step S1108, the acquiring unit 111 detects the event and acquires the event information. In step S1112, the acquiring unit 111 generates the acquisition request information for requesting the acquisition of the history information of the user and the validity reliability value at that point in time which are registered in the P2P database 221, and the communication unit 130 transmits the acquisition request information to the node apparatus 200. In step S1116, the acquiring unit 211 of the node apparatus 200 acquires the history information of the user and the validity reliability value at that point in time from the P2P database 221. In step S1120, the communication unit 230 transmits the history information of the user and the validity reliability value at that point in time to the information providing apparatus 100.

In step S1124, the evaluating unit 112 of the information providing apparatus 100 updates the validity reliability value using the history information of the user, the event information, and the validity reliability value at that point in time. A flow of update processing of the validity reliability value will be described later. In step S1128, the registration control unit 113 generates the registration request information for requesting the registration of the validity reliability value and the various types of information (for example, the event information, the weighting of the user, the validity evaluation value, the number of times of the event, or the like) output in the course of the various types of processing in the P2P database 221, and the communication unit 130 transmits the registration request information, the validity reliability value, and the like to the node apparatus 200. In step S1132, the registration control unit 212 of the node apparatus 200 registers the validity reliability value and the like in the P2P database 221, such that a series of processing ends.

Next, an example of a flow of update processing of the validity reliability value in step S1124 will be described with reference to Fig. 10. In step S1200 in Fig. 10, the user weighting calculating unit 112a of the information providing apparatus 100 performs the weighting of the user on the basis of the history information of the user and the online information. For example, the user weighting calculating unit 112a decides the topic of the online information, and performs the weighting on the basis of the degree of association between the topic of the online information and the history information of the user.

In step S1204, the validity evaluation value calculating unit 112b calculates the validity evaluation value on the basis of the event information. For example, the validity evaluation value calculating unit 112b calculates the validity evaluation value on the basis of a kind of each event and the like. In step S1208, the validity reliability value calculating unit 112c updates the validity reliability value on the basis of the weighting of the user, the validity evaluation value, and the validity reliability value at that point in time acquired from the P2P database 221, such that a series of processing ends.

### (Flow of provision processing of online information)

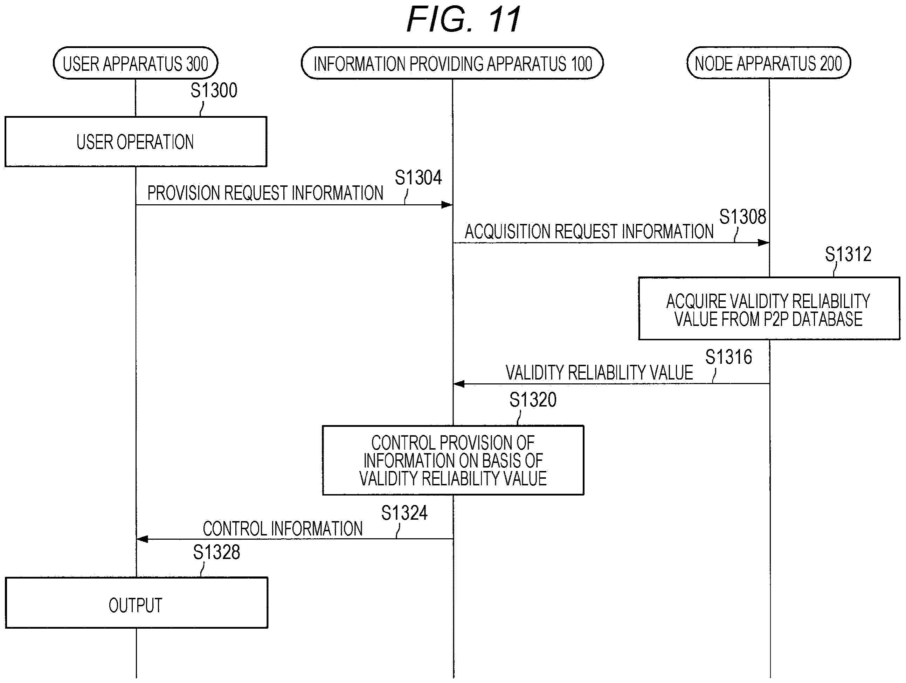

Next, an example of a flow of provision processing of the online information will be described with reference to Fig. 11.

In step S1300, the user performs an operation for requesting the provision of the online information using the input unit 320 of the user apparatus 300. In step S1304, the control unit 310 generates the provision request information on the basis of the operation by the user, and the communication unit 350 transmits the provision request information to the information providing apparatus 100. The acquiring unit 111 of the information providing apparatus 100 generates the acquisition request information for requesting the acquisition of the validity reliability value of the online information requested by the user on the basis of the provision request information, and the communication unit 130 transmits the acquisition request information to the node apparatus 200.

In step S1312, the acquiring unit 211 of the node apparatus 200 acquires the validity reliability value from the P2P database 221. In step S1316, the communication unit 230 transmits the validity reliability value to the information providing apparatus 100. In step S1320, the provision control unit 114 of the information providing apparatus 100 controls the provision of the online information on the basis of the validity reliability value. For example, the provision control unit 114 performs control not to provide online information in which validity reliability value is smaller than the predetermined value to the user, or performs control to provide the validity reliability value and the online information in association with each other. In step S1324, the provision control unit 114 generates control information on the basis of a control content, and the communication unit 130 transmits the control information to the user apparatus 300. In step S1328, the control unit 310 of the user apparatus 300 controls the output unit 330 such as the display, the speaker, or the like on the basis of the control information to realize the output of the online information, such that a series of processing ends.

Note that each step in flowcharts or sequence diagrams shown in Figs. 9 to 11 does not necessarily need to be processed in time series in the order described. In other words, each step in the flowcharts or the sequence diagrams may be processed in order different from the order described or may be processed in parallel.

### <3. Modification>

The flow of processing by each apparatus has been described hereinabove. Next, a modification of the present disclosure will be described.

### (3.1. Request of feedback from user)

An information providing apparatus 100 according to a modification may request feedback, which is a kind of event, from the user in order to more accurately evaluate reliability of the online information. More specifically, the information providing apparatus 100 may make a request for feedback of the reason why the event has been performed (for example, the reason why the online information has been shared), an impression or an opinion on the online information, some expected value indicating the reliability, or the like, in a case where the information providing apparatus 100 detects that an event has been performed.

For example, in a case where the user operates the user apparatus 300 to perform the event, the information providing apparatus 100 may cause a display screen of the user apparatus 300 to display a pop-up including a pull-down menu, a text box, or the like to which the reason why the event has been performed, the impression or the opinion on the online information, some expected value indicating the reliability, or the like, can be input, by transmitting a predetermined control signal to the user apparatus 300.

Then, in a case where the user provides the feedback using the pop-up, the information providing apparatus 100 uses the feedback for calculating and updating the validity reliability value. For example, when the information providing apparatus 100 calculates the validity evaluation value on the basis of the event information, the information providing apparatus 100 may analyze the reason why the event has been performed, the impression or the opinion on the online information, some expected value indicating the reliability, or the like, which are fed back from the user, and calculate the validity evaluation value using an analysis result. Therefore, accuracy of the validity evaluation value is improved, and accuracy of the finally output validity reliability value is thus improved. Note that it is assumed in the present modification that the control unit 110 or the acquiring unit 111 of the information providing apparatus 100 functions as a feedback requesting unit that makes a request to the user for the feedback, but the present disclosure is not limited to thereto.

Here, the information providing apparatus 100 may request the feedback only from a more highly weighted user, instead of requesting the feedback from all the users who have performed the event. More specifically, after the event is performed, the information providing apparatus 100 performs the weighting of the user on the basis of the history information of the user and the online information. Then, the information providing apparatus 100 may request the feedback from the user in the manner described above if the weighting is higher than a predetermined value. Therefore, the information providing apparatus 100 can request the feedback only from a user having a high familiarity with the online information, and can thus improve accuracy of the validity reliability value. Note that a content of the feedback or a method of requesting the feedback from the user is not limited to those described above.

### (3.2. Coping with change in evaluation)

There is a possibility that the evaluation of the reliability of the online information will change over time. Therefore, the information providing apparatus 100 according to the modification updates the validity reliability value by preferentially using information regarding a newer event. More specifically, as described above, the validity evaluation value and the weighting of the user used for updating the validity reliability value are registered in the P2P database 221. Then, at the time of updating the validity reliability value, the information providing apparatus 100 updates the validity reliability value using predetermined numbers of validity evaluation values and weightings of the user, which are calculated within a predetermined period from that point in time. In a case where the numbers of validity evaluation values and weightings of the user are larger than the predetermined number, the information providing apparatus 100 updates the validity reliability value using newer information. In other words, in a case where a new event occurs and calculation of the validity evaluation value and the weighting of the user are performed, the information providing apparatus 100 updates the validity reliability value by replacing the validity evaluation value and the weighting of the user used at the time of updating the validity reliability value last time with a new validity evaluation value and a new weighting of the user. Therefore, the information providing apparatus 100 can reflect the evaluation that changes over time in the validity reliability value.

Furthermore, in a case where a new event occurs and calculation of the validity evaluation value and the weighting of the user are performed, the information providing apparatus 100 may decide whether or not to replace the validity evaluation value and the weighting of the user used at the time of updating the validity reliability value last time with a new validity evaluation value and a new weighting of the user, on the basis of the weighting of the user. More specifically, in a case where the newly performed weighting of the user is lower than a predetermined value, the validity evaluation value and the weighting of the user used at the time of updating the validity reliability value last time may not be replaced with a new validity evaluation value and a new weighting of the user. Therefore, evaluation performed in the past by a user having a familiarity with the online information is not replaced with evaluation newly performed by a user with a low familiarity with the online information, and accuracy of the validity reliability value is thus improved.

Furthermore, in a case where the validity evaluation value and the weighting of the user regarding the same user as a user who has performed the new event are used at the time of updating the validity reliability value last time, the information providing apparatus 100 may update the validity reliability value by replacing the validity evaluation value and the weighting of the user regarding the user, which are used at the time of updating the validity reliability value last time, with a new validity evaluation value and a new weighting of the user. Therefore, for example, even in a case where the same user continuously performs a plurality of events on the same online information, only the latest validity evaluation value and the latest weighting of the user regarding the user are used for updating the validity reliability value, and manipulation of the validity reliability value due to the continuous performance of the plurality of events on the same online information by the same user is thus prevented.

Note that the information providing apparatus 100 does not acquire the validity evaluation value and the weighting of the user from the P2P database 221 every time the event occurs, and may realize the processing described above by caching these pieces of information in its own apparatus. More specifically, in a case where the new event occurs, the information providing apparatus 100 may acquire the validity evaluation value and the weighting of the user used at the time of updating the validity reliability value last time from a cache, and replace these pieces of information with new information to update the validity reliability value.

### (3.3. Update of validity reliability value by P2P database program 222)

Hereinabove, the information providing apparatus 100 has performed the update of the validity reliability value. Here, in the modification, the P2P database program 222 of the node apparatus 200 may perform the update of the validity reliability value.

More specifically, the information providing apparatus 100 provides the event information to the node apparatus 200 to cause the node apparatus 200 to register the event information in the P2P database 221, in a case where the information providing apparatus 100 detects occurrence of the event. Thereafter, the P2P database program 222 evaluates a familiarity of the user with the online information on which the event was performed on the basis of the history information of the user registered in the P2P database 221, and performs the weighting of the user. Then, the P2P database program 222 calculates the validity evaluation value on the basis of the event information and the like registered in the P2P database 221. Moreover, the P2P database program 222 updates the validity reliability value on the basis of the weighting of the user, the validity evaluation value, and the validity reliability value at that point in time registered in the P2P database 221. Finally, the P2P database program 222 registers the updated validity reliability value and various types of information (for example, the weighting of the user, the validity evaluation value, or the like) output in the course of the processing, in the P2P database 221.

Therefore, processing from the occurrence of the event to the update of the validity reliability value is automated. Furthermore, since the P2P database program 222 has tamper resistance, it is possible to prevent the validity reliability value and the like output by a series of processing from being tampered with. Note that the P2P database program 222 may realize various variations of processing described above.

### <4. Hardware Configuration Example>

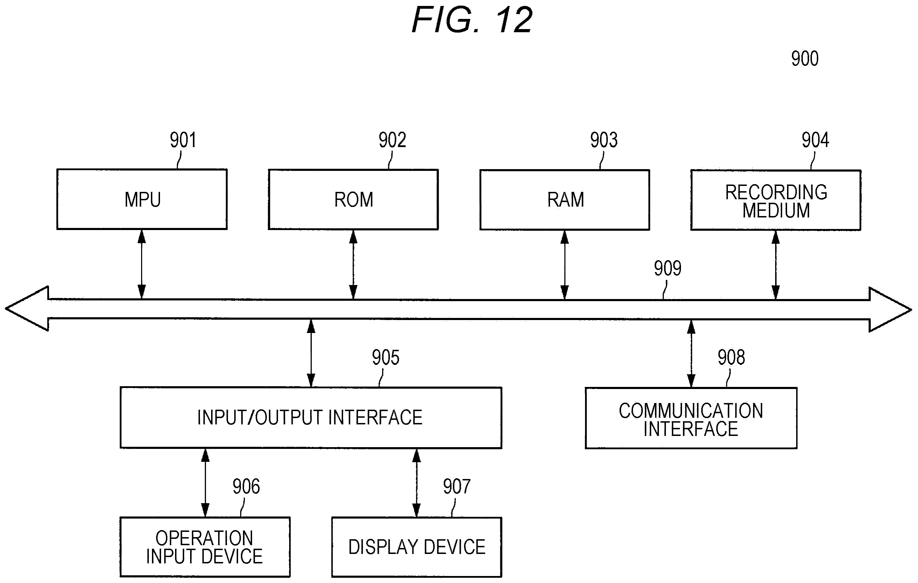

The modification of the present disclosure has been described hereinabove. Next, a hardware configuration of each apparatus will be described with reference to Fig. 12.

Fig. 12 is a block diagram showing an example of a hardware configuration of the information providing apparatus 100, the node apparatus 200, or the user apparatus 300. The information providing apparatus 100, the node apparatus 200, or the user apparatus 300 can be embodied by an information processing apparatus 900 shown in Fig. 12.

The information processing apparatus 900 includes, for example, an MPU 901, a ROM 902, a RAM 903, a recording medium 904, an input/output interface 905, an operation input device 906, a display device 907, and a communication interface 908. Furthermore, the information processing apparatus 900 connects each component by a bus 909 as a data transmission path, for example.

The MPU 901 includes, for example, one or two or more processors, various processing circuits, or the like including an arithmetic circuit such as an MPU or the like, and functions as the control unit 110 of the information providing apparatus 100, the control unit 210 of the node apparatus 200, or the control unit 310 of the user apparatus 300. Note that the control unit 110 of the information providing apparatus 100, the control unit 210 of the node apparatus 200, or the control unit 310 of the user apparatus 300 may include a dedicated (or general-purpose) circuit (for example, a processor or the like separate from the MPU 901) capable of realizing the various types of processing described above.

The ROM 902 stores control data or the like such as programs, operation parameters, or the like used by the MPU 901. The RAM 903 temporarily stores, for example, programs or the like executed by the MPU 901.

The recording medium 904 functions as the storage unit 120 of the information providing apparatus 100, the storage unit 220 of the node apparatus 200, or the storage unit 340 of the user apparatus 300, and stores various data such as data, various programs, or the like regarding information processing according to the present embodiment, such as, for example, the online information, the validity reliability value, or the like. Here, examples of the recording medium 904 can include a magnetic recording medium such as a hard disk or the like and a non-volatile memory such as a flash memory or the like. Furthermore, the recording medium 904 may be detachable from the information processing apparatus 900.

The input/output interface 905 connects, for example, the operation input device 906 or the display device 907. Here, examples of the input/output interface 905 can include a universal serial bus (USB) terminal, a digital visual interface (DVI) terminal, a high-definition multimedia interface (HDMI) (registered trademark) terminal, various processing circuits, and the like.

Furthermore, the operation input device 906 is provided, for example, on the information processing apparatus 900, and is connected to the input/output interface 905 inside the information processing apparatus 900. Examples of the operation input device 906 can include a keyboard, a mouse, a keypad, a touch panel, a microphone, an operation button, a rotary selector such as a direction key, a jog dial, or the like, or a combination thereof. The operation input device 906 functions as the input unit 320 of the user apparatus 300.

Furthermore, the display device 907 is provided, for example, on the information processing apparatus 900, and is connected to the input/output interface 905 inside the information processing apparatus 900. Examples of the display device 907 can include a liquid crystal display, an organic electro-luminescence (EL) display, or the like. The display device 907 functions as the output unit 330 of the user apparatus 300.

Note that it goes without saying that the input/output interface 905 can also be connected to an external device such as an external operation input device, an external display device, or the like of the information processing apparatus 900. Furthermore, the display device 907 may be a device capable of display and user operation, such as, for example, a touch panel or the like.

The communication interface 908 is a communication means that is included in the information processing apparatus 900, and functions as the communication unit 130 of the information providing apparatus 100, the communication unit 230 of the node apparatus 200, or the communication unit 350 of the user apparatus 300. Furthermore, the communication interface 908 may have a function of performing wireless or wired communication with an arbitrary external apparatus such as, for example, a server or the like through an arbitrary network (or directly). Here, examples of the communication interface 908 can include a communication antenna and a radio frequency (RF) circuit (wireless communication), an IEEE802.15.1 port and a transmission/reception circuit (wireless communication), an IEEE802.11 port and a transmission/reception circuit (wireless communication), a local area network (LAN) terminal and a transmission/reception circuit (wired communication), or the like.

Note that the hardware configuration of the information processing apparatus 900 is not limited to the configuration shown in Fig. 12. For example, the information processing apparatus 900 may not include the communication interface 908 in a case where the information processing apparatus 900 performs communication through an external communication device to which the information processing apparatus 900 is connected. Furthermore, the communication interface 908 may be a configuration that can perform communication in a plurality of communication manners Furthermore, the information processing apparatus 900 may not include, for example, the operation input device 906, the display device 907, or the like. Furthermore, for example, some or all of the configurations shown in Fig. 12 may be realized by one or more integrated circuits (ICs).

### <5. Summary>

As described above, the information processing system according to the present disclosure can more appropriately evaluate the reliability of the online information. Then, the information processing system according to the present disclosure can control provision of the online information on the basis of the reliability. Therefore, the information processing system according to the present disclosure can prevent online information having low reliability from being provided to the user (or can provide information regarding the reliability of the online information to the user), and thus, can further enhance a learning effect.

Hereinabove, the preferred embodiments of the present disclosure have been described in detail with reference to the accompanying drawings, but the technical scope of the present disclosure is not limited to such embodiments. It will be apparent to those skilled in the art of the present disclosure that various modifications or alterations can be conceived within the scope of the technical idea described in the claims, and it is naturally understood that these modifications or alterations also fall within the technical scope of the present disclosure.

Furthermore, the effects described in the present specification are only illustrative or exemplary rather than being restrictive. That is, the technology according to the present disclosure can accomplish other effects apparent to those skilled in the art from the description of the present specification, in addition to or instead of the effects described above.

Note that the following configurations also fall within the technical scope of the present disclosure.
(1) An information processing apparatus including:
   an acquiring unit that acquires information regarding an event performed on online information by a user and history information of the user registered in a P2P database; and
   an evaluating unit that evaluates reliability of the online information on the basis of the information regarding the event and the history information.
(2) The information processing apparatus according to the above (1), in which
   the evaluating unit evaluates the reliability by evaluating a familiarity of the user with the online information on the basis of the history information.
(3) The information processing apparatus according to the above (2), in which
   the evaluating unit evaluates the familiarity on the basis of a degree of association between a topic of the online information and the history information, a quantity and a quality of knowledge of the user about the topic, a temporal proximity between the event and each history, or the number of topics with which the user is familiar.
(4) The information processing apparatus according to the above (2) or (3), in which
   the history information includes learning history information, job history information, behavior history information, or purchase history information.
(5) The information processing apparatus according to any one of the above (1) to (4), in which
   the evaluating unit evaluates the reliability on the basis of a kind of the event, information added by the user at the event, or an event that has been performed by the user in the past.
(6) The information processing apparatus according to any one of the above (1) to (5), in which
   the evaluating unit updates the evaluation of the reliability on the basis of the information regarding the event and the history information.
(7) The information processing apparatus according to the above (6), in which
   the evaluating unit updates the evaluation of the reliability every time the event occurs.
(8) The information processing apparatus according to the above (6) or (7), in which
   the evaluating unit updates the evaluation of the reliability by preferentially using information regarding a newer event.
(9) The information processing apparatus according to any one of the above (1) to (8), further including
   a registration control unit that controls registration of an evaluation result of the reliability in the P2P database.
(10) The information processing apparatus according to the above (9), in which
   the evaluating unit evaluates the reliability using a predetermined program provided in the P2P database and executed on the P2P database.
(11) The information processing apparatus according to any one of the above (1) to (10), in which
   the event includes sharing of the online information, performance of "Like!", "+1", "retweet", "good/bad evaluation", "useful/not useful", or "5-level evaluation" on the online information, contribution of a comment to the online information, or registration of the online information in a "bookmark".
(12) The information processing apparatus according to any one of the above (1) to (11), in which
   the event further includes an event that was able to be performed on the online information by the user, but has not been performed on the online information by the user.
(13) The information processing apparatus according to any one of the above (1) to (12), further including
   a feedback requesting unit that requests feedback to the online information from the user, the feedback being a kind of the event.
(14) The information processing apparatus according to any one of the above (1) to (13), further including
   a provision control unit that controls provision of the online information on the basis of an evaluation result of the reliability.
(15) The information processing apparatus according to the above (14), in which
   the provision control unit does not provide the online information in which a value indicating the evaluation result of the reliability is lower than a predetermined value or provides the online information and the value indicating the evaluation result of the reliability in association with each other.
(16) The information processing apparatus according to the above (14) or (15), in which
   the provision control unit controls a user to which the online information is provided on the basis of a familiarity with the online information.
(17) The information processing apparatus according to any one of the above (1) to (16), in which
   the online information includes information disclosed on social media.
(18) The information processing apparatus according to any one of the above (1) to (17), in which
   the P2P database is blockchain data.
(19) An information processing method executed by a computer, including:
   acquiring information regarding an event performed on online information by a user and history information of the user registered in a P2P database; and
   evaluating reliability of the online information on the basis of the information regarding the event and the history information.
(20) A program for causing a computer to realize:
   acquiring information regarding an event performed on online information by a user and history information of the user registered in a P2P database; and
   evaluating reliability of the online information on the basis of the information regarding the event and the history information.

### REFERENCE SIGNS LIST

- 100: Information providing apparatus
- 110: Control unit
- 111: Acquiring unit
- 112: Evaluating unit
- 112a: User weighting calculating unit
- 112b: Validity evaluation value calculating unit
- 112c: Validity reliability value calculating unit
- 113: Registration control unit
- 114: Provision control unit
- 120: Storage unit
- 130: Communication unit
- 200: Node apparatus
- 210: Control unit
- 211: Acquiring unit
- 212: Registration control unit
- 220: Storage unit
- 221: P2P database
- 222: P2P database program
- 230: Communication unit
- 300: User apparatus
- 310: Control unit
- 320: Input unit
- 330: Output unit
- 340: Storage unit
- 350: Communication unit
- 400: P2P network
- 500: Network

## Claims

1. An information processing apparatus comprising:
an acquiring unit that acquires information regarding an event performed on online information by a user and history information of the user registered in a P2P database; and
an evaluating unit that evaluates reliability of the online information on a basis of the information regarding the event and the history information.

2. The information processing apparatus according to claim 1, wherein
the evaluating unit evaluates the reliability by evaluating a familiarity of the user with the online information on a basis of the history information.

3. The information processing apparatus according to claim 2, wherein
the evaluating unit evaluates the familiarity on a basis of a degree of association between a topic of the online information and the history information, a quantity and a quality of knowledge of the user about the topic, a temporal proximity between the event and each history, or a number of topics with which the user is familiar.

4. The information processing apparatus according to claim 2, wherein
the history information includes learning history information, job history information, behavior history information, or purchase history information.

5. The information processing apparatus according to claim 1, wherein
the evaluating unit evaluates the reliability on a basis of a kind of the event, information added by the user at the event, or an event that has been performed by the user in past.

6. The information processing apparatus according to claim 1, wherein
the evaluating unit updates the evaluation of the reliability on a basis of the information regarding the event and the history information.

7. The information processing apparatus according to claim 6, wherein
the evaluating unit updates the evaluation of the reliability every time the event occurs.

8. The information processing apparatus according to claim 6, wherein
the evaluating unit updates the evaluation of the reliability by preferentially using information regarding a newer event.

9. The information processing apparatus according to claim 1, further comprising
a registration control unit that controls registration of an evaluation result of the reliability in the P2P database.

10. The information processing apparatus according to claim 9, wherein
the evaluating unit evaluates the reliability using a predetermined program provided in the P2P database and executed on the P2P database.

11. The information processing apparatus according to claim 1, wherein
the event includes sharing of the online information,
performance of "Like!", "+1", "retweet", "good/bad evaluation", "useful/not useful", or "5-level evaluation" on the online information, contribution of a comment to the online information, or registration of the online information in a "bookmark".

12. The information processing apparatus according to claim 1, wherein
the event also includes an event that was able to be performed on the online information by the user, but has not been performed on the online information by the user.

13. The information processing apparatus according to claim 1, further comprising
a feedback requesting unit that requests feedback to the online information from the user, the feedback being a kind of the event.

14. The information processing apparatus according to claim 1, further comprising
a provision control unit that controls provision of the online information on a basis of an evaluation result of the reliability.

15. The information processing apparatus according to claim 14, wherein
the provision control unit does not provide the online information in which a value indicating the evaluation result of the reliability is lower than a predetermined value or provides the online information and the value indicating the evaluation result of the reliability in association with each other.

16. The information processing apparatus according to claim 14, wherein
the provision control unit controls a user to which the online information is provided on a basis of a familiarity with the online information.

17. The information processing apparatus according to claim 1, wherein
the online information includes information disclosed on social media.

18. The information processing apparatus according to claim 1, wherein
the P2P database is blockchain data.

19. An information processing method executed by a computer, comprising:
acquiring information regarding an event performed on online information by a user and history information of the user registered in a P2P database; and
evaluating reliability of the online information on a basis of the information regarding the event and the history information.

20. A program for causing a computer to realize:
acquiring information regarding an event performed on online information by a user and history information of the user registered in a P2P database; and
evaluating reliability of the online information on a basis of the information regarding the event and the history information.
